# EUROPEAN PATENT APPLICATION

(11) **EP 1 972 974 A1**
(43) Date of publication of application: **24.09.2008**
(21) Application number: 07104485.3
(22) Date of filing: 20.03.2007
(51) Int. Cl.: G02B 6/38

(54) **Optical fibre shutter assembly**

(71) Applicant: Ridgemount Technologies Limited, Launton Bicester Oxfordshire OX26 5EL (GB)
(72) Inventor: Limbert, Mark, Towcester, Oxfordshire NN12 7AB (GB); Peters, Christopher, Thame, Oxfordshire OX9 3YJ (GB)

(57) **Abstract**

An optical fibre shutter assembly 7 comprising a mounting plate member 1, a shutter member 2, a spring mechanism 3 and an alignment pin 4.

The mounting plate member 1 has generally a rectangular body with either a singular or a plurality of sprung tine legs 5 extending and folded back from one end and with a plurality of mounting brackets 6 formed perpendicular from each side of the mounting plate1.The sprung tine legs 5 are of corresponding shape to cavities and features 8 & 9 in the optical receptacle 10.

The sprung tine legs 5 provide positional orientation and clamping of the optical shutter assembly 7 to the optical receptacle 10 by location into the cavities 8 whilst the optical receptacle 10 has mated to it plug connectors 12. This process of optical fibre shutter assembly 1 attachment to the populated optical receptacle 13 is performed without hindrance to the function of either the optical receptacle 10 or the plug connector 13 and results in a shuttered optical receptacle assembly 15 where the optical fibre shutter assembly 7 is within the dimensional envelope of the optical receptacle 10 hence not interfering with adjacent optical receptacles.

The mounting plate member 1 is generally of a metallic or polymer composition.

The sprung shutters 2 have generally rectangular form of corresponding size and shape to the optical receptacle front face 10 with location brackets 2b formed perpendicular to top face, and with the main body section 2c being formed at an angle non-perpendicular to the mounting plate member 1. The sprung shutters 2 have formed on each side folded tabs 2a with end faces perpendicular to the mounting plate member 1. The sprung shutter members 2 are generally of a metallic or polymer composition.

The spring mechanism 3 is located and secured to the mounting plate member 1 and is attached to the sprung shutter member 2 to ensure closing forces are applied to ensure the sprung shutter member automatically closes onto the optical receptacle 10 in the absence of mated plug connectors 12.

## Description

The invention relates to an optical fibre shutter assembly.

Single and multi channel fibre optic plug connectors and receptacles traditionally use removable non retained dust caps to prevent ingress of contamination and to prevent limited radiation of transmitted light into free space.

As a result of continuous advances in optical transmission technology the levels of radiated power in systems is now significantly higher. This is typically as a result of higher power lasers being used to achieve greater transmission distances, and the introduction of multiplexed signals being transmitted through a single fibre. This significant increase in radiated light power gives rise to the need for a fool proof method of automatically blocking or absorbing the radiated light when plug connectors are disconnected from the optical receptacles to ensure required levels of user eye protection is satisfied. Current optical receptacles employing the use of either retained or non retained dust caps do not offer fool proof solutions and as a result create potentially hazardous environments where high power levels of radiated light pollution could exist.

In service there are significantly high volumes of un-shuttered optical receptacles mounted into a variety equipment, in a variety of configurations, orientations and densities all with potential to create hazardous environments where high power levels of radiated light pollution could exist. The optical fibre shutter assembly enables these un-shuttered optical receptacles to protected with an automatic self closing optical fibre shutter which can be fitted without the need for plug connector disconnect and hence network downtime.

According to an aspect of the invention there is provided an optical fibre shutter assembly comprising:
a metallic or polymer mounting plate member with either a singular or a plurality of sprung tine legs of corresponding shape to cavities and features in the optical receptacle extending and folded back from one end and with a plurality of mounting brackets formed perpendicular from each side of the mounting plate.
a singular or plurality of independently sprung metallic or polymer shutters located onto the mounting plate between the formed perpendicular mounting brackets and mounted such that the sprung shutters are non-perpendicular to the mounting plate.
A singular or plurality of spring mechanisms mounted between the formed mounting brackets on the mounting plate to enable closing load forces to be applied to the sprung shutters such that in an un-coupled state the sprung shutter automatically closes onto the optical receptacle.

The mounting plate member may be of singular form with a singular sprung tine for use with a single sprung shutter with an overall dimensional envelope such that this assembly can be mounted with where necessary another singular shutter assembly onto duplex optical receptacles.

The optical fibre shutter assembly preferably has a singular mounting plate member of rectangular form onto which a plurality of sprung shutter are fitted of correspondingly shaped required for the optical receptacle and located to close onto the optical receptacle such that radiated light is blocked.

Embodiments of the invention will now be described by way of example only, with reference to the accompanying drawings, in which:
Figure 1 is a diagrammatic front view representation of a duplex fibre optic shutter assembly according to a first embodiment of the invention.
Figure 2 is a diagrammatic rear view representation of a duplex fibre optic shutter assembly according to a first embodiment of the invention.
Figure 3 is a diagrammatic view of a duplex fibre optic shutter assembly in the open position.
Figure 4 is a diagrammatic representation of a typical optical receptacle.
Figure 5 shows the assembly of figure 4 with two plug connectors aligned for location into the optical receptacle.
Figure 6 shows the assembly of figure 4 with two plug connectors received and location into the optical receptacle.
Figure 7 shows the assembly of figure 6 with the assembly of figure 3 aligned for location into the optical receptacle.
Figure 8 shows the assembly of figure 6 with the assembly of figure 3 received and located into the optical receptacle.
Figure 9 shows the assembly of figure 6 with the assembly of figure 3 received and located into the optical receptacle in an inverted position.
Figure 10 shows the assembly of figure 4 with the assembly of figure 1 aligned for location into the optical receptacle without plug connectors inserted.
Figure 11 shows the assembly of figure 4 with the assembly of figure 1 received and located into the optical receptacle without plug connectors inserted.
Figure 12 is a diagrammatic front view representation of a singular fibre optic shutter assembly according to a first embodiment of the invention.
Figure 13 is a diagrammatic rear view representation of a singular fibre optic shutter assembly according to a first embodiment of the invention.
Figure 14 shows the assembly of figure 4 with the two assemblies of figure 12 received and located into the optical receptacle with one in the open position and the other in the closed position.
Figure 15 shows the assembly of figure 6 with the two assemblies of figure 12 received and located into the optical receptacle.

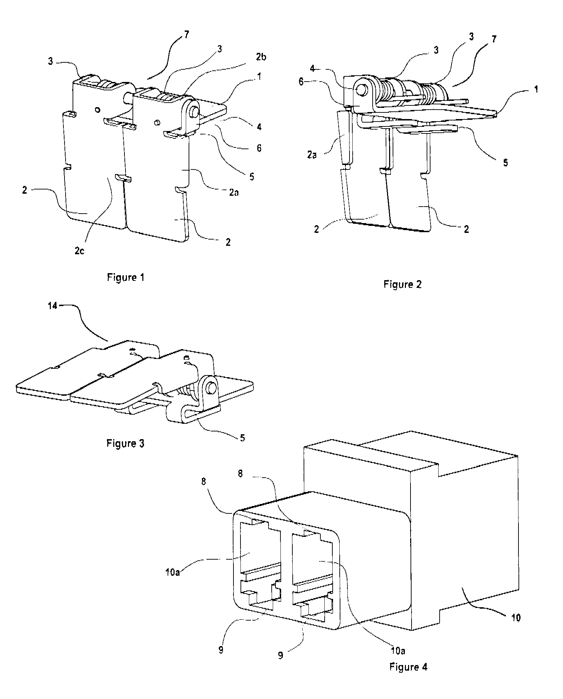

Referring to Figures 1 and 2, a first embodiment of the invention provides an optical fibre shutter assembly 7 comprising a mounting plate member 1, sprung shutters 2, spring mechanisms 3, and a location pin 4.

The mounting plate member 1 has generally rectangular form with either a singular or plurality of sprung tine legs 5 extending and folded back from one end of the member and a plurality of mounting brackets 6 formed perpendicular on each side of the mounting plate member.

The sprung shutters 2 have generally rectangular form with location brackets 2b formed perpendicular to top face, and with the main body section 2c being formed at an angle non-perpendicular to the mounting plate member 1. The sprung shutters 2 have formed on each side folded tabs 2a with end faces perpendicular to the mounting plate member 1.

Referring to Figures 3, 7 and 8, with the plug connectors 12 located into the optical receptacle 10 the optical shutter assembly in the open position 14 enables the optical shutter assembly 14 to be inserted into the optical receptacle 10 such that the sprung tine legs 5 locate and engage in the cavities 8

Referring to Figure 4, the optical receptacle 10 exhibits cavities 8 at the top of the optical receptacle and cavities 9 at the bottom of the optical receptacle.

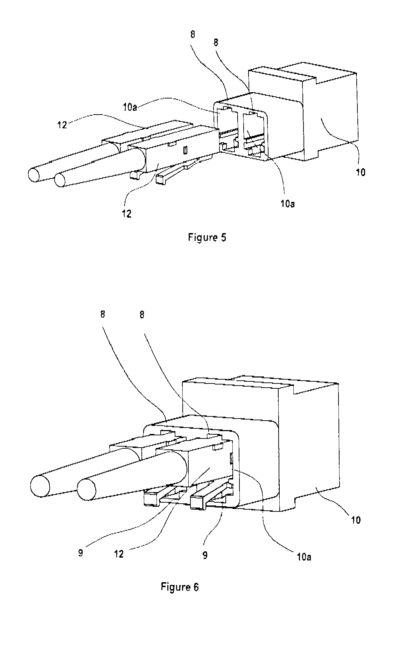

Referring to Figures 5 and 6, the plug connectors 12 locate and engage into the receiving cavities 10a of the optical receptacle 10 leaving the cavities 8 and 9 free for insertion of the sprung tine legs 5.

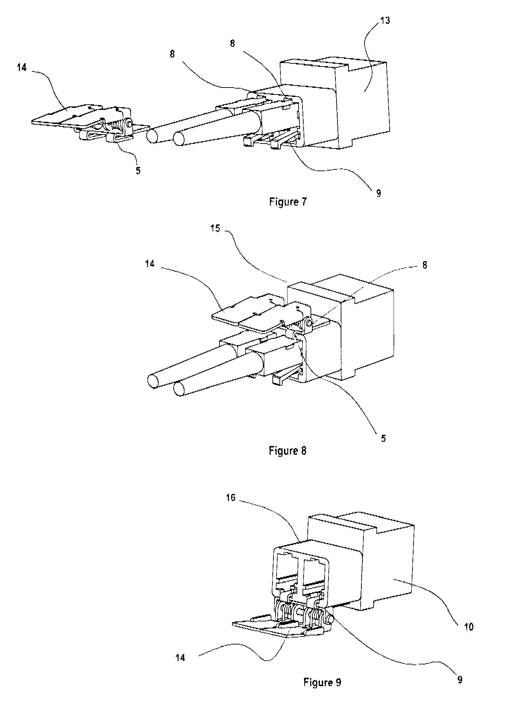

Referring to Figure 9, the optical shutter assembly 14 is able to be located in cavities 9 of the optical receptacle.

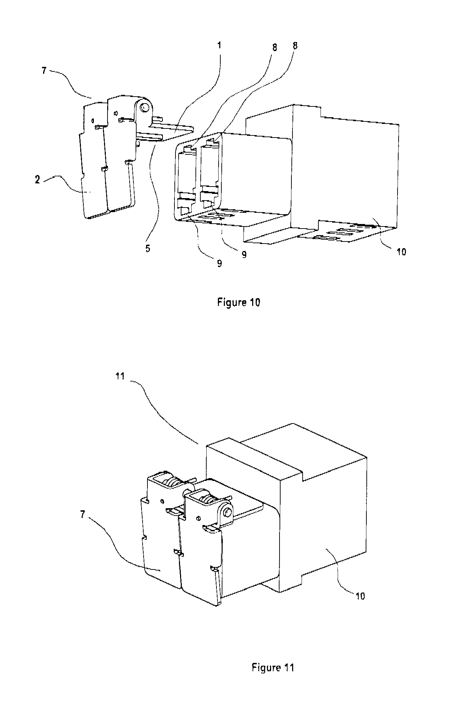

Referring to Figures 10 and 11, the sprung tine legs 5 locate and engage into the cavities 8 of the optical receptacle 10 to result in the shuttered optical receptacle assembly 11.

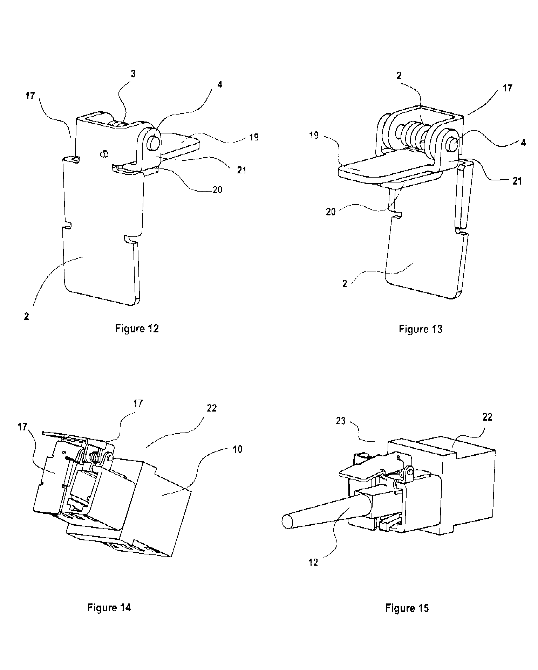

Referring to Figures 12, 13, 14 and 15, a singular optical shutter assembly 17 comprising of a single mounting plate 19 with a single sprung tine leg 21 and perpendicular mounting brackets 20, a single sprung shutter 2, and a spring mechanism 3.

## Claims

1. An optical fibre shutter assembly comprising:
a mounting plate member having either a singular or a plurality of sprung tine legs of corresponding shape to cavities or features in the optical receptacle such that the optical fibre shutter assembly can be mounted to the optical receptacle without the need for uncoupling of mated plug connector to the aforesaid optical receptacle, and wherein all extremities of the optical fibre shutter assembly are within the dimensional envelop of the optical receptacle to which the optical fibre shutter assembly is mounted so as not to hinder functionality and to enable adjacent mounting of optical receptacles to maximise the packing density of the aforesaid optical receptacle during use.
an optical fibre shutter assembly, wherein a singular or plurality of independently sprung shutters close automatically using spring mechanisms to either block or absorb the radiation of transmitted light from either a singular or a plurality of optical channels within the optical receptacle when plug connectors are uncoupled from the optical receptacle.
an optical fibre shutter assembly, wherein a singular or plurality of independently sprung shutters close automatically using spring mechanisms to prevent dust ingress or other forms of contamination from either a singular or a plurality of optical channels within the optical receptacle when plug connectors are uncoupled from the optical receptacle.

2. An optical fibre shutter assembly as claimed in claim 1, wherein a singular or plurality of independently sprung non-perpendicular shutters when in the closed blocking position ensure all non absorbed radiated transmitted light is reflected back on a non-perpendicular path away from the optical axis of the optical receptacle.

3. An optical fibre shutter assembly as claimed in claim 1 wherein the optical fibre shutter assembly can be fitted to the optical receptacle in a plurality of positions without detriment to functionality of the optical receptacle and still enabling adjacent mounting of optical receptacles to maximise the packing density of the aforesaid optical receptacle during use.

4. An optical fibre shutter assembly as claimed in claim 1 wherein the optical fibre shutter assembly component parts are of a metallic composition.

5. An optical fibre shutter assembly as claimed in claim 1 wherein the optical fibre shutter assembly component parts are of a plastic polymer composition.

6. An optical fibre shutter assembly as claimed in claim 1 wherein the optical fibre shutter assembly component parts are of a plastic polymer and metallic composition.

7. An optical fibre shutter assembly as claimed in claim 1 wherein the optical fibre shutter assembly is of a modular construction permitting singular optical fibre shutter assemblies to be mounted individually to cover individual optical channels within the optical receptacle and to permit singular optical fibre shutter assemblies to be mounted side by side on optical receptacles with a plurality of optical channels without hindrance to the functionality of the optical receptacle or plug connectors, and to enable singular optical fibre shutter assemblies to be mounted side by side on adjacent optical receptacles without hindrance to the functionality of the optical receptacle or plug connectors.

8. An optical fibre shutter assembly as claimed in claim 1 wherein the optical fibre shutter assembly comprises of sprung shutters of different colours to enable optical channel identification.

9. An optical fibre shutter assembly as claimed in claim 1 wherein the optical fibre shutter assembly comprises of sprung shutters with different alpha or numeric identification to enable optical channel identification.

10. An optical fibre shutter assembly as claimed in claim 1 wherein the optical fibre shutter assembly comprises of sprung shutters of different colours and with different alpha or numeric identification to enable optical channel identification.
